# DEMANDE DE BREVET EUROPEEN

(11) **EP 0 668 233 A2**
(43) Date de publication de la demande: **23.08.1995**
(21) Numéro de dépôt: 95201041.1
(22) Date de dépôt: 05.06.1992
(51) Int. Cl.: B65H 61/00

(54) **Dispositif pour enrouler ou pour enrouler dérouler du câble sur touret**

(30) Priorité: 04.05.1992 FR 9205887
(62) Demande divisionnaire de: 92401578.7
(71) Demandeur: SOCIETE DES ETABLISSEMENTS EDMOND DUBOIS & FILS, S.A., F-59131 Rousies (FR)
(72) Inventeur: Dubois, Thierry, F-59750 Feignies (FR)
(74) Mandataire: Lepage, Jean-Pierre

(57) **Abrégé**

Dispositif (1) pour enrouler ou pour enrouler dérouler notamment des câbles ou des fils de nature, de dimension, de forme et de masse diverses, conditionnés en rouleaux sur un touret (2) de diamètre variable.

Selon l'invention, il comprend des moyens de mesure (40) du câble autorisant un enroulement ou un déroulement du câble selon deux sens par l'avant ou par l'arrière du dispositif.

Application au domaine du conditionnement de câbles ou de fils.

## Description

L'invention est relative à un dispositif pour enrouler ou un dispositif pour enrouler dérouler notamment du câble ou du fil conditionné en rouleaux sur touret. Elle trouvera son application dans tous les domaines de l'activité économique où l'on doit enrouler ou dérouler du câble, du fil électrique, des libres optiques, des tuyaux ou tout autre produit linéaire souple sur un touret.

Le conditionnement industriel de produits linéaires souples, tels que des tuyaux, des câbles électriques ou des fils d'acier, de nature, de forme, de dimension variées, ou tout autre produit similaire, est actuellement réalisé par enroulement de ceux-ci sur un touret, dont les dimensions dépendent bien entendu des applications.

Pour effectuer cette opération, il est connu actuellement des dispositifs pour enrouler constitués par un bâti qui est fixe en élévation et qui comporte deux éléments montés mobiles qui se lèvent afin d'assurer un enroulement sur le touret du câble ou du fil en fonction des besoins. Ce bâti peut être, dans certaines formes d'application, monté mobile sur des roulettes mais il est fixe en translation verticale.

Les deux éléments mobiles qui se lèvent sont généralement constitués par des vérins autonomes ou non, dont la régulation et la mise en fonctionnement nécessitent l'utilisation d'organes de contrôle et de réglage complexes et d'un coût élevé. Par ailleurs, il faut également noter que de tels dispositifs pour enrouler sont en pratique d'un emploi limité puisqu'ils n'autorisent que l'utilisation de tourets de dimensions déterminées.

Enfin, en raison de la nécessité d'avoir recours à deux éléments mobiles, constitués par des vérins qui se lèvent pour assurer la mise en place désirée du touret, il est fréquent qu'en pratique, l'ajustement de la position relative de ces deux vérins ne soit pas toujours obtenu de façon satisfaisante, ce qui a pour conséquence de nuire au bon enroulement du câble ou du fil sur le touret et donc, de diminuer l'efficacité du dispositif. On constate également une irrégularité dans l'enroulement préjudiciable à l'utilisation ultérieure du câble.

Pour assurer le déroulage du câble ou du fil enroulé sur le touret, il est connu d'avoir recours à des dispositifs pour dérouler de deux types. C'est ainsi que l'on connaît les dispositifs pour dérouler à rouleaux, constitués par un bâti qui présente au moins une rampe guide d'accès destinée à permettre la mise en place du touret à l'intérieur de rails associés à des rouleaux. Toutefois, de tels dérouleurs à rouleaux présentent de nombreux inconvénients d'utilisation et notamment, ils nécessitent d'avoir recours a des tourets qui présentent des jantes.

Au cours des différentes manipulations du touret depuis la mise en place du fil ou du câble sur celui-ci jusqu'au site d'exploitation, la jante se trouve soumise à des contraintes mécaniques qui la détériorent et l'abîment de sorte que le touret ne tourne plus correctement lorsque celui-ci est placé à l'intérieur du dérouleur. Il en résulte que de tels tourets deviennent très rapidement inutilisables, ce qui accroît considérablement le coût de l'opération.

Pour remédier à cet inconvénient, on a pensé à réaliser des dérouleurs qui sont constitués par deux montants latéraux qui supportent un axe monté mobile à une hauteur déterminée au moyen de vérins.

De tels dérouleurs, bien que permettant l'utilisation de touret sans jante, présentent en pratique de nombreux inconvénients et notamment, celui de nécessiter une double opération de pompage en raison de la présence des deux vérins pour effectuer la levée de chaque montant latéral et donc du touret de chaque côté. Une telle opération est souvent longue, complexe et fastidieuse et il est par ailleurs délicat d'obtenir un ajustement précis de la position relative de chacun des deux vérins, ce qui a pour conséquence de diminuer l'efficacité du déroulement du câble.

Quel que soit le type de dérouleur, la structure support sur laquelle repose le touret est toujours fixe et statique, sans aucune mobilité par translation verticale.

On peut reprocher à tous ces dispositifs de n'être pas suffisamment adaptés pour assurer un enroulement ou un déroulement rapide et aisé du touret. Notamment, cette manipulation sur le lieu d'utilisation n'est pas toujours facile, en particulier lorsqu'il faut disposer de palans ou de moyens de manutention spécialisés pour manipuler directement le touret. Qui plus est, cette impossibilité de déplacement en translation de la structure porteuse limite considérablement les capacités d'utilisation de ces dispositifs et nécessite d'avoir recours à des moyens complémentaires complexes d'un prix élevé afin de pouvoir enrouler ou dérouler efficacement des tourets de différentes natures et de différents gabarits.

Le but principal de la présente invention est de fournir un dispositif pour enrouler ou un dispositif pour enrouler dérouler qui remédie aux inconvénients des dispositifs actuellement connus en ce qui concerne leur capacité d'utilisation, leur coût de fabrication et leur facilité d'utilisation, notamment pour des tourets de gabarits différents.

Un autre but de la présente invention réside dans le fait qu'il peut être ajusté sur des dispositifs de transport et de levage existants, ce qui permet une production en grande série à faible coût.

Un autre but de la présente invention réside également dans le fait que des moyens d'entraînement sont prévus en prise directe sur un arbre du touret, ce qui permet l'utilisation de moyens hydrauliques d'un faible poids, assurant une multiplication du couple et une réduction de la puissance nécessaire.

Un autre avantage de la présente invention réside dans le fait que le moteur hydraulique peut facilement se désaccoupler des organes hydrauliques complémentaires et qu'il peut être alimenté par un moteur électrique relié au secteur ou bien être autonome, ce qui accroît les capacités d'utilisation notamment sur des chantiers.

Un autre avantage de la présente invention réside dans le fait que les moyens pour mesurer, disposés sur le bâti support, sont fixés sur une structure articulée, ce qui permet d'assurer un enroulement ou un déroulement du câble dans deux sens, par l'avant ou par l'arrière du dispositif.

Un autre avantage de la présente invention réside dans le fait qu'il ne nécessite pas l'utilisation d'organes complexes mais uniquement d'un seul vérin pour assurer le levage de la structure support constituant le bâti, ce qui facilite son utilisation, quelles que soient les conditions.

Un autre avantage de la présente invention réside dans le fait que ce dispositif pour enrouler ou ce dispositif pour enrouler dérouler est robuste en raison de sa simplicité de conception, de sorte qu'il peut être utilisé même dans des conditions de travail difficiles.

D'autres buts et avantages de la présente invention apparaîtront au cours de la description qui va suivre, qui n'est cependant donnée qu'à titre indicatif et qui n'a pas pour but de la limiter.

A cet effet, le dispositif pour enrouler ou le dispositif pour enrouler dérouler notamment du câble ou du fil, de nature, de dimension, de formes et de masses diverses, conditionné en rouleaux sur un touret de diamètre variable, est caractérisé par le fait qu'il comprend des moyens de mesure du câble autorisant un enroulement ou un déroulement du câble selon deux sens par l'avant ou par l'arrière du dispositif.

L'invention sera mieux comprise à la lecture de la description suivante, accompagnée des dessins en annexe parmi lesquels :
- la figure 1 est une vue schématique qui illustre un dispositif pour enrouler ou pour enrouler dérouler conforme à l'invention, qui comporte un touret en position basse,
- la figure 2 est une vue similaire à la figure 1 qui illustre le touret en position levée,

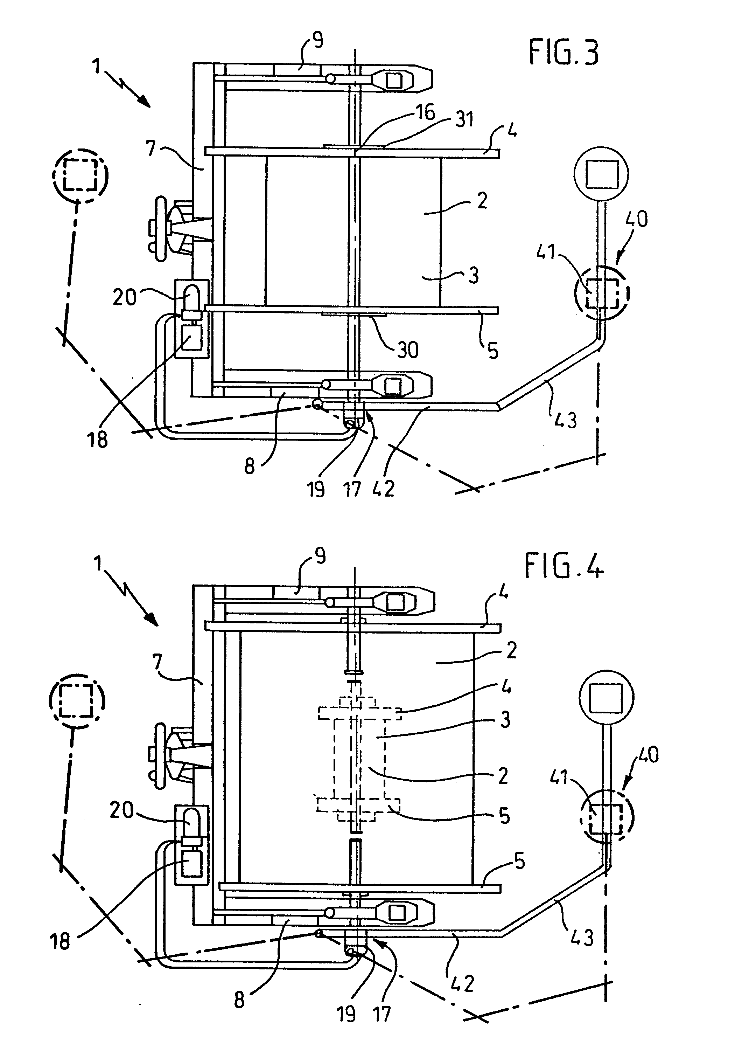

- la figure 3 est une vue schématique qui représente en vue de dessus un dispositif pour enrouler ou pour enrouler dérouler conforme à l'invention, en position d'utilisation, qui comporte un touret,
- la figure 4 est une vue schématique similaire à la figure 3, qui représente l'utilisation de tourets de diamètre variable,
- la figure 5 est une vue schématique qui illustre les moyens de réglage et d'ajustement de l'arbre d'entraînement du touret assujettis sur chaque semelle de la structure porteuse,
- la figure 6 est une vue schématique qui illustre un toc articulé associé à un contre toc disposé sur l'arbre d'entraînement afin d'assurer un maintien adapté du touret.

La présente invention a pour objet un dispositif pour enrouler ou pour enrouler dérouler des produits filiformes souples ou rigides, tels que notamment du câble, par exemple de transmission d'information, des fils électriques, de fibres optiques, des tuyaux ou autres produits similaires de nature, de dimension, de forme et de masse diverses, conditionnés en rouleaux sur un touret de dimensions variables. Elle trouvera son application dans tous les secteurs de l'économie où l'on doit conditionner de tels produits sur un touret et plus particulièrement dans le domaine de la fabrication, du transport et de la mise en place de ces produits.

Dans toute la description qui va suivre, on décrira une application du dispositif conforme à l'invention pour enrouler ou enrouler dérouler un câble. Bien entendu, cette application n'est aucunement limitative et il est tout à fait possible d'avoir recours à un tel dispositif dans d'autres applications.

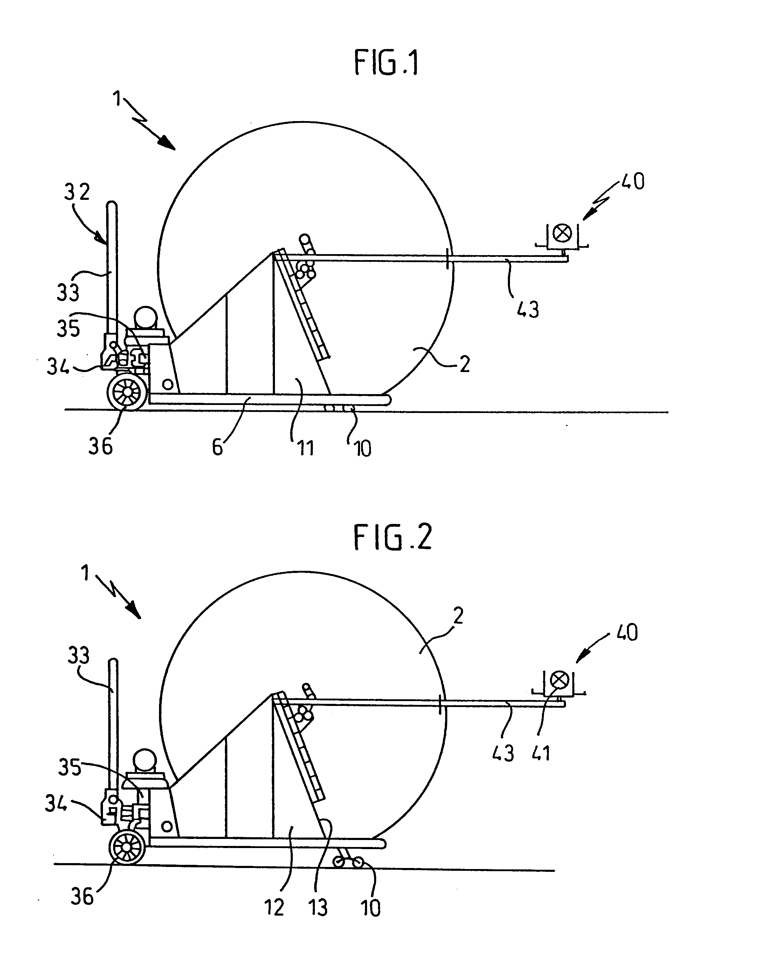

En se référant aux figures 1 et 2, on voit un dispositif (1) conforme à l'invention, destiné à enrouler ou à enrouler dérouler des produits filiformes souples ou rigides, tels que des câbles ou des fils de nature, de dimension, de forme et de masse diverses sur un touret (2) réalisé en bois, en métal ou en matière de synthèse en fonction des besoins, d'un type classique, qui présente un tambour intérieur (3) de diamètre variable en fonction des applications, inséré entre deux flasques latéraux (4 et 5) de hauteur et de diamètre adaptés en fonction des besoins.

Le dispositif (1) comporte un bâti qui présente une structure (6) comprenant un longeron transversal (7) et deux semelles latérales (8 et 9) montées mobiles sur des roulettes (10) articulées et sur chacune desquelles est assujetti un voile (11, 12) dont l'une des faces (13) est inclinée.

Sur chaque voile (11, 12) et plus particulièrement sur la face (13) sont fixés des moyens de réglage et d'ajustement (14) d'un arbre (15) destiné à traverser de part en part un orifice central (16) ménagé dans le tambour du rouleau (3) du touret (2) lorsque celui-ci est en position montée.

La structure (6) du bâti comporte des moyens d'entraînement (17) de l'arbre (15) montés en prise directe sur celui-ci afin de permettre une mise en rotation dans le sens de l'enroulement ou dans le sens du déroulement du câble. Ces moyens (17) sont constitués par une centrale hydraulique (18) d'un type classique et d'une puissance adaptée associée à un moteur hydraulique (19) générant un couple moteur important à partir d'une puissance limitée, ce qui lui permet d'être suffisamment léger et peu encombrant pour être placé sur la structure (6).

Ainsi, grâce à l'utilisation de ce moteur hydraulique, on limite la puissance nécessaire pour assurer un enroulement de touret de dimension élevée, ainsi que l'enroulement ou le déroulement sur celui-ci de fil ou de câble relativement lourd.

La centrale hydraulique (18) peut être, dans une forme de réalisation, alimentée au moyen d'un moteur électrique (20) relié au secteur ou bien, dans une autre forme de réalisation, posséder une alimentation autonome, ce qui accroît les capacités d'utilisation du dispositif (1).

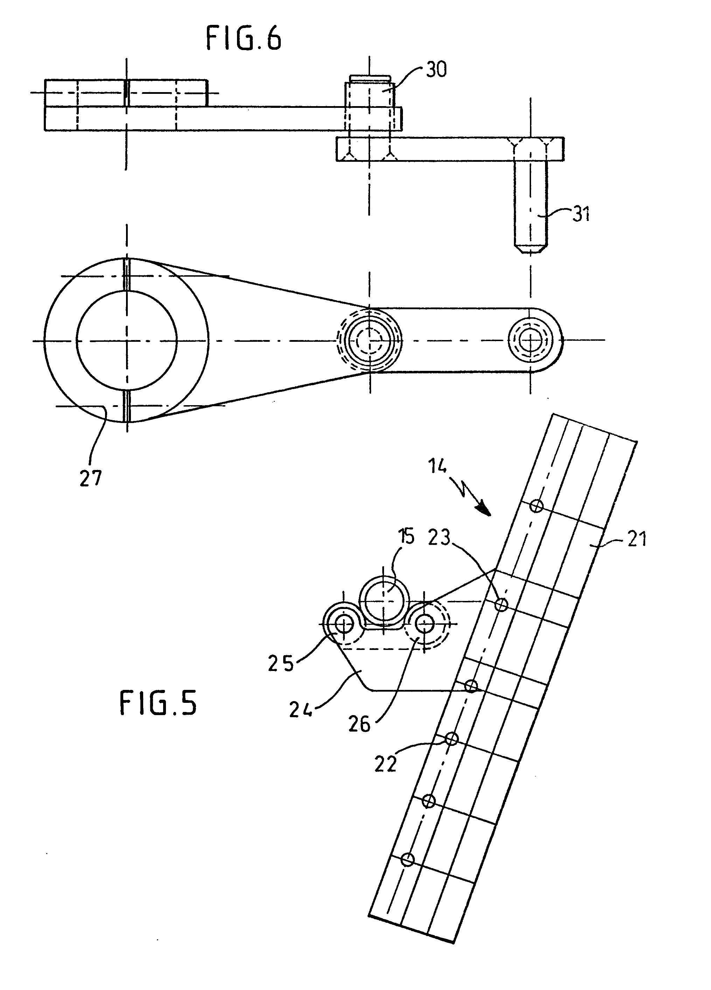

Pour pouvoir enrouler ou dérouler du câble ou du fil sur un touret (2) de diamètre et de dimension variables, les moyens (14) disposés sur chacun des voiles (11, 12) sont constitués, comme plus particulièrement montrés aux figures 5 et 6, par une pièce support de palier (21) qui comporte des orifices de brochage (22) constituant des trous d'indexage destinés à recevoir une broche de fixation (23) d'une pièce support (24) des roulements (25, 26) et de l'arbre (15) traversant dans le touret (2). Il est ainsi possible, grâce au dispositif (1) conforme à l'invention, de pouvoir enrouler ou dérouler du câble ou du fil sur des tourets dont le diamètre est compris, par exemple, entre 300 et 1500 millimètres, ce qui augmente les possibilités de mise en oeuvre du dispositif.

Pour assurer un maintien approprié de l'arbre (15) et éviter notamment une désolidarisation de celui-ci de l'un des voiles (11) ou (12), une bague de blocage (27) est prévue à cet effet.

Par ailleurs, afin d'assurer un enroulement ou un déroulement dans de bonnes conditions du fil ou du câble disposé sur le touret (2) de diamètre variable, un toc (30) articulé associé à un contre toc (31) est prévu sur l'arbre (15) en étant disposé contre la face extérieure de chaque flasque (4, 5).

La structure (6) est montée mobile en translation verticale grâce à des moyens de levage (32) directionnels, constitués ici par un timon (33) manoeuvrable manuellement, associé à un système hydraulique de levage (34) qui ne comporte qu'un unique vérin (35), ce qui limite le nombre d'opérations nécessaires à l'obtention du réglage de la hauteur du dispositif (1).

Ainsi, en raison de la simplicité et de la robustesse du dispositif (1) et notamment de la présence d'un unique vérin (35) nécessaire pour assurer la mise en place du touret (2) depuis une position basse telle qu'illustrée à la figure 1 jusque dans une position haute telle qu'illustrée à la figure 2, le dispositif (1) conforme à l'invention est d'un emploi aisé et ceci, quelles que soient les conditions d'utilisation.

Les moyens de levage (32) sont montés mobiles sur une roue (36) articulée, afin d'assurer un déplacement manuel de l'ensemble du dispositif en fonction des besoins.

Des moyens (40) pour assurer la mesure du câble ou du fil enroulé ou déroulé sont également prévus sur la structure (6). Ils sont constitués par un bloc de mesure (41) d'un type classique et connu de l'Homme de l'Art. Selon l'invention, le bloc (41) est monté sur une structure porteuse (42) disposée sur un bras articulé (43) assujetti au bâti de la structure (6).

Ainsi, il est possible de pouvoir, en fonction des besoins, positionner le bloc de mesure (41) de manière à assurer un enroulement ou un déroulement du câble ou du fil selon deux sens par l'arrière ou par l'avant du dispositif, ce qui était impossible jusqu'alors avec les dispositifs actuellement connus. Une telle possibilité d'enroulement ou de déroulement du câble ou du fil selon deux sens génère un gain important de productivité et il accroît considérablement les capacités d' utilisation du dispositif (1).

Le bras baladeur porte le coffret de commande et l'entretien, en cas de panne, peut se faire en ayant sous les yeux l'ensemble du dispositif et notamment la centrale (18) et le coffret de puissance.

Bien entendu, d'autres mises en oeuvre de la présente invention auraient pu être envisagées sans pour autant sortir du cadre de celle-ci. C'est ainsi que l'on ne s'écartera pas du cadre de l'invention par des modifications de la structure (6) du bâti ou bien par des modifications de l'agencement sur celui-ci des moyens d'entraînement ou de mesure.

## Revendications

1. Dispositif (1) pour enrouler ou enrouler dérouler notamment des câbles ou des fils de nature, de dimension, de forme et de masse diverses, conditionnés en rouleaux sur un touret de diamètre variable, caractérisé en ce qu'il comprend des moyens de mesure (40) du câble autorisant un enroulement ou un déroulement du câble selon deux sens par l'avant ou par l'arrière du dispositif.

2. Dispositif pour enrouler ou pour enrouler dérouler selon la revendication 1, caractérisé en ce que les moyens pour mesurer (40) sont montés sur une structure support (41) articulée sur le bâti (6).
